# EUROPEAN PATENT APPLICATION

(11) **EP 4 725 300 A1**
(43) Date of publication of application: **15.04.2026**
(21) Application number: 24205926.9
(22) Date of filing: 10.10.2024
(51) Int. Cl.: A01G 25/16, B05B 3/00

(54) **IRRIGATION SYSTEM**

(71) Applicant: Husqvarna AB, 561 82 Huskvarna (SE)
(72) Inventor: MERKLE, Martin, 89168 Niederstotzingen (DE); ANDRIOF, Frederik, 89171 Illerkirchberg (DE)
(74) Representative: Finkele, Rolf

(57) **Abstract**

An irrigation system (100) comprises a sprinkler (200) for watering of at least one pre-defined area (A1, A2, A3), and at least one mounting structure (300) configured such that the sprinkler (200) is removably couplable in a defined orientation to the at least one mounting structure (300). The irrigation system (100) is characterized that the sprinkler (200) comprises a position determining device (230) configured to determine a cardinal orientation of the sprinkler (200). The irrigation system (100) further comprises a control unit (224) configured to control the watering of the at least one pre-defined area (A) dependent on the determined cardinal orientation of the sprinkler (200) when the sprinkler (200) is removably coupled to one of the at least one mounting structure (300).

## Description

### TECHNICAL FIELD

The present disclosure relates to an irrigation system, and more particularly to the irrigation system having a sprinkler for watering of a pre-defined area, and at least one mounting structure configured such that the sprinkler is removably couplable to the at least one mounting structure.

### BACKGROUND

An irrigation system, particularly including a sprinkler with a rotating sprinkler head and a nozzle is used to precisely irrigate agricultural crops, lawns, gardens, planted areas, landscapes, golf courses, and other evenly shaped or arbitrarily shaped areas. For this purpose, the angle and the throwing distance to the corner points of the surface (or an area) are first determined and stored in a storage device of a control unit included with the irrigation system. Precise irrigation is then started by means of the rotating sprinkler head. On the one hand, this allows very water-saving irrigation, but on the other hand, it requires a complex and expensive sprinkler. Therefore, it is desirable that such a sprinkler is usable for several areas and at different positions. A mounting structure which remains in the evenly shaped or arbitrarily shaped area to be irrigated, is used for mounting the sprinkler at each position, in order to ensure the necessary correct alignment respectively positioning of the sprinkler. However, if only the contour is changed according to the schedule, but a user forgets to move the sprinkler to the right position or the user chooses the wrong contour at a position, damage may occur because completely wrong areas are watered.

Currently, different methods for automatic detection of the position of the sprinkler are known. While a satellite-based method like GPS is very expensive, an NFC approach requires an additional NFC tag inside the mounting structure and a short distance between the receiving antenna inside the sprinkler and the tag. Further, mechanical encoding and sensing via different buttons is also conceivable but would require a complex sealing concept to protect the electrical circuit inside the sprinkler.

An example of an irrigation system is provided by United States Patent US 3,703,993 A (hereinafter referred to as the '993 reference). The '993 reference discloses a lawn-watering equipment, and more particularly relates to a device for producing a watering pattern that is made to conform to the shape and size of a lawn portion that is bordered by walks, parking areas, buildings, and the like that should not be wetted. Moreover, the device is removable and then reinstalled and oriented so that the conformed watering pattern again matches the layout of the lawn portion.

### SUMMARY OF THE INVENTION

In view of the above, it is an objective of the present invention to solve or at least reduce the drawbacks discussed above. The objective is at least partially achieved by an irrigation system according to the present invention.

According to an aspect of the present invention, the irrigation system comprises a sprinkler for watering of at least one pre-defined area, and at least one mounting structure configured such that the sprinkler is removably couplable in a defined orientation to the at least one mounting structure. The irrigation system is characterized that the sprinkler comprises a position determining device configured to determine a cardinal orientation of the sprinkler. The irrigation system further comprises a control unit configured to control the watering of the at least one pre-defined area dependent on the determined cardinal orientation of the sprinkler when the sprinkler is removably coupled to one of the at least one mounting structure.

The present disclosure advantageously provides an adjustable irrigation system that is adjustable based on the contour of the pre-defined area to be irrigated and/ or the position of the sprinkler in one of the at least one pre-defined area to be irrigated. Precisely, the irrigation system is provided with the at least one mounting structure, for example, two mounting structures, which are engaged with the ground surface of the at least one pre-defined area to be irrigated, and which are positioned at a distance from each other. The two mounting structures are each configured to removably mount the sprinkler for irrigation purposes as per user requirement. During a set-up process, the cardinal orientation of each mounting structure is determined using the position determining device, and afterwards stored in the control unit. Further, the angle and the throwing distance to the corner points respectively the contour of the respective pre-defined area to be irrigated, are determined and stored in the control unit. Then, the angle and the throwing distance or other watering characteristics are correlated to the cardinal orientation of the mounting structure. Thus, when the user removably couples or mounts the sprinkler to one of the mounting structures, the cardinal orientation of the sprinkler is determined using the position determining device and communicated to the control unit. Then, the control unit matches the cardinal orientation of the sprinkler with the specific mounting structure, and accordingly controls the watering of the pre-defined area.

The throwing distance may be defined as the distance which the outflow or water jet emanating from the sprinkler may travel before hitting the ground. The throwing distance may be measured with respect to a central axis of the sprinkler. The central axis may further be defined as the longitudinal axis or the vertical axis of the sprinkler. If the sprinkler is symmetrical, the central axis may divide the sprinkler into two equal halves or mirror images. If the sprinkler is asymmetrical, the central axis may be defined as extending through, e.g., the center of the sprinkler housing, the center of the nozzle arrangement or one of the nozzles. In these cases, the central axis is more generally a vertical axis of the sprinkler.

The present disclosure uses water as a liquid for irrigation. Water is a commonly used liquid to irrigate lawns, gardens, and the like. However, any other suitable liquid thereof may be used as per the application requirement.

According to an exemplary embodiment of the invention, the position determining device is a compass, in particular, an electric compass.

A compass is a user-friendly, reliable, and cost-efficient position determining device. Using an electric compass may allow to directly further process the output data. Further, an electric compass is cost-efficient. Alternatively, a magnetic compass may be used. This may have the advantage that a magnetic compass is reliable and robust. The compass may be removably coupled or mounted to the sprinkler.

According to an exemplary embodiment of the invention, the irrigation system, in particular the control unit, comprises a storage device, wherein in the storage device a correlation between the cardinal orientation and a spray pattern for the watering of the at least one pre-defined area is stored. The control unit may comprise the storage device or a memory unit, which may store the data related to the cardinal orientation, the spray patterns corresponding to the cardinal orientation, other operating parameters or data for smooth and efficient operation of the irrigation system.

According to an exemplary embodiment of the invention, each of the at least one pre-defined area is associated with the one of the at least one mounting structure such that the sprinkler is usable to water different pre-defined areas depending on the mounting structure with which the sprinkler is removably coupled. Thereby, from each mounting structure a different pre-defined area respectively a different section may be watered by one and the same sprinkler. Furthermore, the cardinal orientation of the mounting structure is stored in the storage device of the irrigation system. Hence, as the cardinal orientation of the sprinkler when removably coupled to one mounting structure corresponds to the cardinal orientation of the mounting structure, the mounting structure to which the sprinkler is coupled is known respectively identified. As in a further step, the pre-defined area is associated with the specific mounting structure, the spray pattern is thereby also identified. Hence, the pre-defined area is automatically selected. Thereby, the user does not need to manually select the "right" spray pattern.

According to an exemplary embodiment of the invention, the irrigation system comprises at least two mounting structures, wherein the at least two mounting structures are positioned separately from each other. In particular the mounting structure is an underground housing or an aboveground plate. The mounting structures may be any number of mounting structures disposed at various positions in the pre-defined area to be irrigated. The mounting structures may be disposed at equal or unequal distances from each other. Further, the mounting structures may have different designs and/or orientations. Further, the mounting structures may be disposed underground or aboveground as per feasibility, ease of maintenance, stability, among other factors. Further, some of the mounting structures may be an aboveground plate and the other mounting structures may be an underground housing. Further, the mounting structures may have a mounting groove to removably mount or couple the sprinkler. However, the removable coupling may be done by any other method or coupling means as well.

According to an exemplary embodiment of the invention, to each of the at least two mounting structures an individual pre-defined area is associated. The individual pre-defined area may be selected dependent on the individual needs of the area to be watered. Therefore, the amount of water, the throwing distance, the duration of the watering, etc. may be individually set dependent on the needs.

Thereby, with the use of solely one sprinkler, a plurality of different areas may be watered. Furthermore, an area which is larger than waterable by one single conventional sprinkler, may be easily watered. In other words, a large area (too large to be watered by one single sprinkler from one single location) may be divided into at least two respectively into a plurality of pre-defined areas, each provided with a respective mounting structure positioned at an arbitrary but fixed and defined location within the corresponding pre-defined area.

According to an exemplary embodiment of the invention, the at least two individual pre-defined areas comprise different shapes. Different shapes of the at least two pre-defined areas according to the present invention may denote that an outer contour of the different areas, particularly pre-defined areas, vary from each other. This may but does not have to result in areas of different sizes depending on the respective field of application. Hence, an increased total area may be efficiently and cost-savingly watered by the use of one single sprinkler. Furthermore, a complex total area may be efficiently and cost-savingly watered by the use of one single sprinkler.

According to an exemplary embodiment of the invention, each of the at least two mounting structures is positioned such that a cardinal orientation of the sprinkler removably coupled to the respective mounting structure, has a cardinal orientation which deviates by at least substantially 10 degrees. It may only be necessary to ensure that the orientation of the different mounting structures differ in relation to their cardinal orientations.

According to an exemplary embodiment of the invention, the irrigation system, in particular, the control unit comprises a processor, wherein the processor is configured to decide which spray pattern is used to water the pre-defined area based on the correlation stored in the storage device. The control unit may comprise the storage device and the processor. Thereby, the storage device and the processor may be communicably coupled to one another. Further, the control unit may be communicably coupled to the position determining device. The processor may deviate the operating parameters of the sprinkler and/or the irrigation system based upon the inputs from the position determining device and the storage device. Being configured to decide which spray pattern is used to water the pre-defined area based on the correlation stored in the storage device according to the present invention may denote that the processor is configured to automatically determine based on the data stored in the storage device, particularly during a set-up of the irrigation system, which spray pattern should be used for the detected cardinal orientation respectively the detected pre-defined area.

According to an exemplary embodiment of the invention, the sprinkler comprises a rotating sprinkler head with at least one nozzle. The rotating sprinkler head may be advantageous to irrigate the entire regular or irregular shaped contour of the pre-defined area or alternatively any portion of the pre-defined area. Further, the at least one nozzle may be used for varying the spraying parameters, such as, but not limited to, spray pattern, spraying speed or spraying distance as per application requirements.

According to an exemplary embodiment of the invention, the control unit is configured to control the rotary speed of the sprinkler head. The control unit is configured to control the watering of the pre-defined area dependent on the determined cardinal orientation of the sprinkler when the sprinkler is removably coupled to one of the at least one mounting structure. Controlling the watering may be done by controlling the rotary speed of the sprinkler head, among other operating parameters.

According to an exemplary embodiment of the invention, the control unit is configured to control the spray pattern of the at least one nozzle and/or the control unit is configured to control the flowrate of the at least one nozzle. The control unit is configured to control the watering of the pre-defined area dependent on the determined cardinal orientation of the sprinkler, when the sprinkler is removably coupled to one of the at least one mounting structure. Controlling the watering may be done by controlling the spray pattern of the at least one nozzle and/or the flowrate of the at least one nozzle by varying, for example, the opening of the valve provided with the sprinkler.

According to a further aspect of the present invention, a method of watering at least one pre-defined area by using the irrigation system comprises removably coupling the sprinkler in a defined orientation to the at least one mounting structure, determining, using the position determining device, a cardinal orientation of the sprinkler, and controlling, using the control unit, the watering of the at least one pre-defined area dependent on the determined cardinal orientation of the sprinkler when the sprinkler is removably coupled to one of the at least one mounting structure. The method allows judicious use of water for irrigating the respective one of the at least one pre-defined area. The method allows precise irrigation of the at least one pre-defined arbitrarily shaped or regular-shaped area. The method may further comprise calibration of the sprinkler according to the position of the sprinkler and/or the contour to be irrigated. The method allows carrying out of the irrigation procedure automatically without any user intervention. The method may further allow communication with a remote device via any wireless communication technique. Thereby, the method may be cost-effective and energy efficient.

According to an exemplary embodiment of the invention, the method further comprises providing the position determining device as a compass, in particular an electric compass. The method advantageously allows to determine the position of the sprinkler in a cost-efficient manner and without having to interfere into the structural design of the irrigation system particularly the physical structure of the sprinkler.

According to an exemplary embodiment of the invention, the method further comprises providing the irrigation system, in particular the control unit, with a storage device, and/or storing a correlation between the cardinal orientation and a spray pattern for the watering of the at least one pre-defined area in the storage device. The storage device may be RAM, ROM, flash memory, or other tangible data storage medium used to store data for allowing efficient irrigation operation. Thereby, the watering of each of the at least one pre-defined area may be automatically performed without the intervention of a user and in a cost efficient and water saving manner.

According to an exemplary embodiment of the invention, the method further comprises providing the irrigation system with at least two mounting structures, in particular, in particular wherein the mounting structure is an underground housing or an aboveground plate, and positioning the at least two mounting structures separately from each other. Multiple mounting structures may be provided to allow watering of large-area and/or ramified areas to be watered. By positioning the at least two mounting structures separately from each other, a more complex total area may be watered. Thus, even a total area which may not be watered by one single sprinkler due to its shape or its landscape conditions may be watered.

According to an exemplary embodiment of the invention, the method further comprises positioning each of the at least two mounting structures such that a cardinal orientation of the sprinkler removably coupled to the respective mounting structure, has a cardinal orientation which deviates by at least substantially 10 degrees. The deviation of at least substantially 10 degrees may allow the system to reliably distinguish between two different positions of the sprinkler.

According to an exemplary embodiment of the invention, the method further comprises associating each of the at least two mounting structures with an individual pre-defined area, providing the irrigation system, in particular the control unit, with a processor, and deciding by the processor which spray pattern is used to water the at least one pre-defined area based on the correlation stored in the storage device. The control unit may be able to communicate with the position determining device. Further, the control unit may be able to carry out calculations and/or algorithms internally to ensure precise irrigation operations, i.e., the control unit ensures that the right amount of water is sprayed at right points or locations in the pre-defined area. Deciding by the processor according to the present invention may denote that the processor based on an algorithm decides respectively determines which spray pattern is used to water the pre-defined area. Therefore, the processor retrieves from the storage device the spray pattern associated with the determined cardinal orientation, and forwards a control command to the respective elements of the sprinkler such that watering corresponding to the spray pattern may be performed.

Before discussing the invention with the help of the drawings the invention will be briefly discussed in general. An irrigation system is provided with a sprinkler for watering of at least one pre-defined area, and at least one mounting structure configured such that the sprinkler is removably couplable in a defined orientation to the at least one mounting structure. A cost-efficient electric compass is used to identify the current position of the sprinkler based on the determined cardinal orientation. It is only necessary to ensure that the positions respectively the cardinal orientations of the different mounting structures differ respectively deviate in relation to each other. Thereby a deviation of about 10 degrees is sufficient to reliably distinguish the different positions and thereby the different mounting structures. As a deviation of about solely 10 degrees is in use a very small deviation, it is unlikely that a user will randomly choose the same cardinal orientation for two different mounting positions.

The irrigation system according to the present invention may have a cost-efficient sensor (also referred to as position determining device) with a low respectively decreased power consumption. Additionally, the solution according to the present invention does not have any influence on the watertightness of the sprinkler and/or the at least one mounting structure.

Further, the sensor may have no special requirements regarding positioning inside the sprinkler and/or the mounting structure, and may simply be soldered to the sprinkler's PCB. Additionally, there may be no impact on the mechanical design of the sprinkler and/or the mounting structure. The irrigation system according to the present invention may allow automatic and safe switching between different contours due to different positions of the sprinkler. The irrigation system according to the present invention may reduce setup complexity if only one position is used.

According to an exemplary embodiment of the invention, the irrigation system may use compass based mounting position detection of the sprinkler and may change irrigation behavior based on detected position of the sprinkler.

According to an exemplary embodiment of the invention, the irrigation system may inform the user if an angle between two positions is not large enough and propose an optimized orientation. According to an exemplary embodiment of the invention, the irrigation system may unlock (advanced) setup features only if multiple positions are detected.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** illustrates a schematic view of an irrigation system according to an exemplary embodiment of the present invention;
**FIG. 2** illustrates a schematic view of an irrigation system having three mounting structures to removably couple a sprinkler according to an exemplary embodiment of the present invention; and
**FIG. 3** illustrates a flowchart of a method of watering at least one pre-defined area by using an irrigation system according to an exemplary embodiment of the present invention.

### DETAILED DESCRIPTION OF THE DRAWINGS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left", "right", "horizontal", "vertical", "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

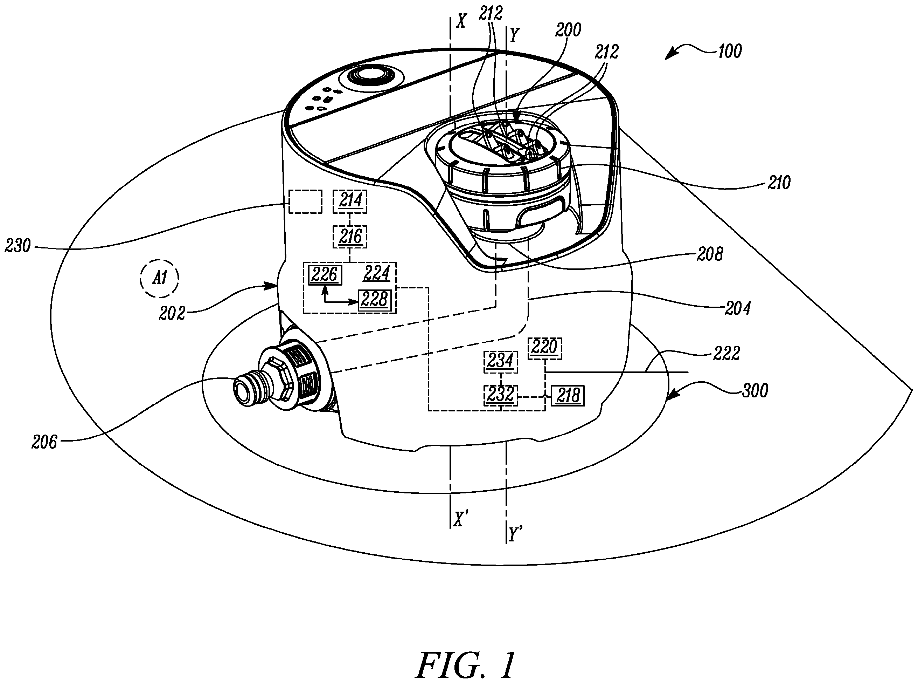

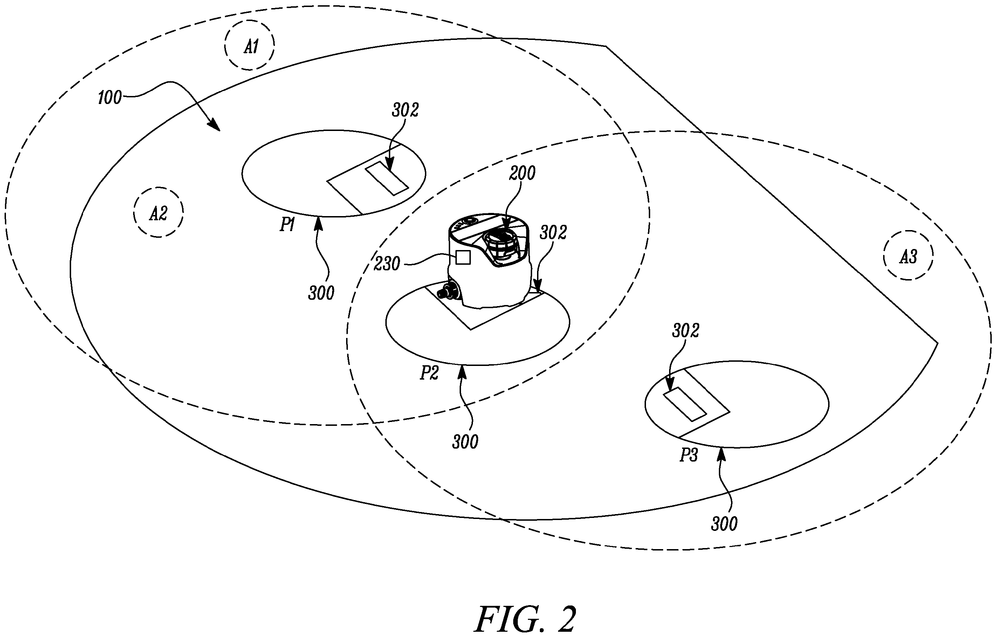

**FIG. 1** illustrates a schematic view of an irrigation system 100 according to an exemplary embodiment of the present invention. The schematic view is not to scale. The irrigation system 100 comprises a sprinkler 200 and at least one mounting structure 300. The sprinkler 200 is configured for watering of a pre-defined area A1, and at least one mounting structure 300. In FIG. 1 for illustration purposes, solely one mounting structure 300 positioned in one pre-defined area A1 is shown not to scale. The mounting structure 300 is configured such that the sprinkler 200 is removably couplable in a defined orientation to the at least one mounting structure 300. This coupling is enabled by a mounting groove 302 (shown in FIG. 2) formed on the mounting structure 300. In other words, the sprinkler 200 is mountable to one or more mounting structures 300 which correspond to one or more positions. The irrigation system 100, as shown in **FIG. 1****,** comprises one mounting structure 300 configured to removably couple the sprinkler 200 at a predefined position and in a defined orientation. The mounting structure 300 as illustrated in **FIG. 1** is an aboveground plate 300. Further, the pre-defined area A1 to be watered or irrigated is shaped like a circle segment for illustration. The spray pattern corresponding to the pre-defined area A1 is stored in a storage device 226 of the sprinkler 200.

Further, the sprinkler 200 comprises a body 202. The body 202 defines a water channel 204 (schematically shown with dotted line in **FIG. 1****).** The water channel 204 is defined between an inlet 206 and an outlet 208 of the body 202. The inlet 206 of the body 202 is couplable respectively coupled to a water supply line, such as a hose or an in-ground piping. Further, the water channel 204 is configured to allow flow of water from the inlet 206 to the outlet 208.

With continuous reference to **FIG 1****,** the sprinkler 200 comprises a rotating sprinkler head 210. The sprinkler head 210 is fluidly coupled to the body 202, wherein the sprinkler head 210 is rotatable relative to the body 202. The sprinkler head 210 is fluidly coupled to the water channel 204 at the outlet 208. Further, at least one nozzle 212 is provided on the sprinkler head 210. The sprinkler head 210 illustrated in **FIG. 1** comprises six nozzles 212. The water flows from the water supply line via the water channel 204 and the sprinkler head 210 through the at least one nozzle 212. Further, the at least one nozzle 212 produces an outflow of the water to be directed to the pre-defined area A1 for irrigation. Further, the at least one nozzle 212 may provide the irrigation of the pre-defined area A1 as required.

Further, the irrigation system 100 comprises a drive mechanism 214. The drive mechanism 214 is configured to drive the rotation of the sprinkler head 210 about its rotational axis Y-Y' that extends parallel to a central axis X-X' of the sprinkler 200 which in turn extends along the longitudinal direction of the sprinkler 200. The drive mechanism 214 is housed in the body 202 of the sprinkler 200. The drive mechanism 214 comprises a motor 216 that is configured to drive the rotation of the sprinkler head 210 about the central axis X-X' through a suitable gear arrangement.

Further, the irrigation system 100 comprises a valve 218. The valve 218 is housed in the body 202 of the sprinkler 200. The valve 218 is configured to control the water flow through the water channel 204. Further, the valve 218 controls a flowrate through the at least one nozzle 212. Further, the valve 218 has an open position, a closed position, and a plurality of intermediatory positions, for adjusting the amount of water sprayed from the sprinkler 200. Further, the valve 218 is used to adjust the flowrate of the water through the at least one nozzle 212 to be set to a desired amount. Further, the position of the valve 218 is controlled by a valve motor 232.

Further, the irrigation system 100 comprises a flow sensor 220 that determines or measures the flowrate through the at least one nozzle 212. The flow sensor 220 is housed in the body 202 of the sprinkler 200. The flow sensor 220 is located upstream of the valve 218 in the direction of flow of the water. In other words, the flow sensor 220 is located in front of the valve 218. Thereby, the valve sensor 220 may not be influenced by possible turbulences occurring at the valve 218. Further, the flow sensor 220 produces an output signal 222 that is representative of the flowrate measured by the flow sensor 220.

With continuous reference to **FIG. 1****,** the irrigation system 100 comprises a control unit 224. The control unit 224 is housed in the body 202 of the sprinkler 200. The control unit 224 comprises a storage device 226 and a processor 228. The processor 228 is configured to communicate with the storage device 226 and the position determining device 230. The storage device 226 is configures to additionally store further data, e.g., data related to the drive mechanism 214, the motor 216, the valve 218, the valve motor 232 and the flow sensor 220. The processor 228 is further configured to process the data stored in the storage device 226 and/or to process the output signal 222, and to control the operation of the irrigation system 100. The different correlations between the determined cardinal orientation and the corresponding spray pattern are stored in the storage device 226.

Further, the sprinkler 200 comprises the position determining device 230 configured to determine a cardinal orientation of the sprinkler 200 when the sprinkler 200 is removably coupled to the mounting structure 300 in the defined orientation. The position determining device 230 is located in a body 202 respectively a main housing of the sprinkler 200. The compass 230 determines a cardinal orientation of the body 202 and therefore of the sprinkler 200, when the sprinkler 200 is mounted to the aboveground plate 300. The determined cardinal orientation is transferred to the storage device 226 and correlated to the corresponding spray pattern by the processor 228. When the sprinkler 200 is mounted to the aboveground plate 300, the position determining device 230 determines the cardinal orientation of the sprinkler 200. Then, the control unit 224 provides a corresponding spray pattern. Therefore, the processor 228 reads out the spray pattern from the storage device 226 which correlates to the cardinal orientation determined by the position determining device 230.

Further, the irrigation system 100 comprises a power supply 234 that provides power to the processor 228 of the control unit 224, the motor 216, the valve motor 232, the flow sensor 220 and/or other components of the sprinkler 200 requiring electrical energy.

FIG. 2 illustrates a schematic view of the irrigation system 100 comprising three mounting structures 300 to removably couple the sprinkler 200 according to an exemplary embodiment of the present invention. Each of the three mounting structures 300 is an aboveground plate comprising a mounting groove 302 (schematically illustrated in FIG. 2) configured to removably couple the sprinkler 200.

Further, the three mounting structures 300 are disposed at three different positions P1, P2 and P3. The three positions P1, P2 and P3 are spaced apart from one another such that if the sprinkler 200 is mounted to either one of the three mounting structures 300, the three determined cardinal orientations differ from each other, particularly by at least substantially 10 degrees. Additionally, from each of the three different positions P1, P2 and P3, different, particularly three different, pre-defined areas A1, A2 and A3 may be watered. The three different areas A1, A2 and A3 to be watered are defined by the corresponding spray pattern defined for the pre-defined area A1, A2 and A3 to be watered. Further, the control unit 224 determines the respective corresponding spray pattern related to the determined position P1, P2 or P3 respectively the determined pre-defined areas A1, A2 or A3. As may be seen from **FIG. 2****,** the corresponding spray pattern correlated to the determined cardinal orientation corresponding to the position P2 is the pre-defined area A2. When the sprinkler 200 is coupled to the mounting structure 300 at position P1, the pre-defined area A1 may be watered. At the position P1 and the position P2 two different pre-defined areas A1 and A2 may be watered. In other words, the pre-defined area A1 watered when the sprinkler 300 is positioned at the position P1 differs from the pre-defined area A2 watered when the sprinkler 300 is positioned at the position P2. Particularly, the shape of the pre-defined area A1 differs from the shape of the pre-defined area A2. Furthermore, a third mounting structure 300 is mounted at a position P3. The position P3 is distant from the position P1 and the position P2. In FIG. 2, the position P2 is positioned between the position P1 and the position P3. When the sprinkler 200 is removably coupled to the mounting structure 300 at the position P3, a third pre-defined area A3 may be watered. As may be clearly seen from FIG. 2, the pre-defined area A3 differs from the pre-defined area A2 and the pre-defined area A1.

A part of the first pre-defined area A1 overlaps with a part of the second pre-defined area 2. Similarly, a part of the pre-defined area A2 overlaps with a part of the pre-defined area A3. Additionally, there is an area in which all three pre-defined areas A1, A2 and A3 overlap with each other. As may be seen in FIG. 2, the total area to be watered which is defined by the outer shape of a combination of the pre-defined area A1, the pre-defined area A2 and the pre-defined area A3, is larger than each of the three pre-defined areas A1, A2 and A3 taken alone. Further, the outer shape of the total area to be watered has a free form.

The cardinal orientation of the sprinkler 200 removably coupled to each of the three mounting structures 300 is determined using the compass 230, in particular the electric compass 230. These three cardinal orientations each corresponds to one of the three mounting structures 300 and therefore to one of the three positions P1, P2 and P3 which are stored in the storage device 226. Further, the spray patterns, particularly the throwing distances, the angular positions, and the flowrates required to efficiently and precisely irrigate the pre-defined area A1 for the position P1, the pre-defined area A2 for the position P2 and the pre-defined area A3 for the position P3 is stored in the storage device 226. Furthermore, in the storage device 226 each cardinal orientation is mapped respectively correlated to a corresponding spray pattern for each position P1, P2 and P3. The control unit 224 accordingly adjusts the spray pattern, i.e., the throwing distance, the angular position and the flowrate of the sprinkler 200, dependent on the determined cardinal orientation.

When a user removably couples the sprinkler 200 to the mounting structure 300 at position P2 (see **FIG. 2****),** the compass 230 determines the cardinal orientation of the sprinkler 200. The cardinal orientation of the sprinkler 200 is communicated to the control unit 224. Then, the control unit 224 compares the determined cardinal orientation of the sprinkler 200 with the stored cardinal orientations of a sprinkler mounted to each of the three mounting structures 300 in a defined orientation, and determines respectively confirms to which mounting structure 300 the sprinkler 200 is mounted. The control unit 224 determines that the sprinkler 200 is mounted to the mounting structure 300 at the position P2. Subsequently, the control unit 224 controls watering of the pre-defined area A2 in accordance with the stored spray pattern.

In other words, the control unit 224 is configured to control the watering of the pre-defined area A2 dependent on the determined cardinal orientation of the sprinkler 200 when the sprinkler 200 is removably coupled to the mounting structure 300 at the position P2. The irrigation system 100, in particular the control unit 224, comprises the storage device 226, wherein a correlation between the cardinal orientation and a spray pattern is stored for each of the positions P1, P2 and P3. Further, the irrigation system 100, in particular the control unit 224, further comprises the processor 228, wherein the processor 228 is configured to decide which spray pattern is used to water the pre-defined area A1, A2 or A3 based on the correlation stored in the storage device 226.

As may be seen from **FIG. 2****,** the compass 230 determines the cardinal orientation of the sprinkler 200 at the position P2 and subsequently the control unit 224 controls watering according to the correlated spray pattern for watering the pre-defined area A2.

Further, the control unit 224 is configured to control the rotary speed of the sprinkler head 210 based on the chosen pre-defined area respectively spray pattern. The control unit 224 controls the motor 216 to control the rotary speed of the sprinkler head 210. Further, the control unit 224 is configured to control the spray pattern of the at least one nozzle 212 and/or the control unit 224 is configured to control the flowrate of the at least one nozzle 212. The control unit 224 controls the flowrate of the at least one nozzle 212 by controlling the position of the valve 218.

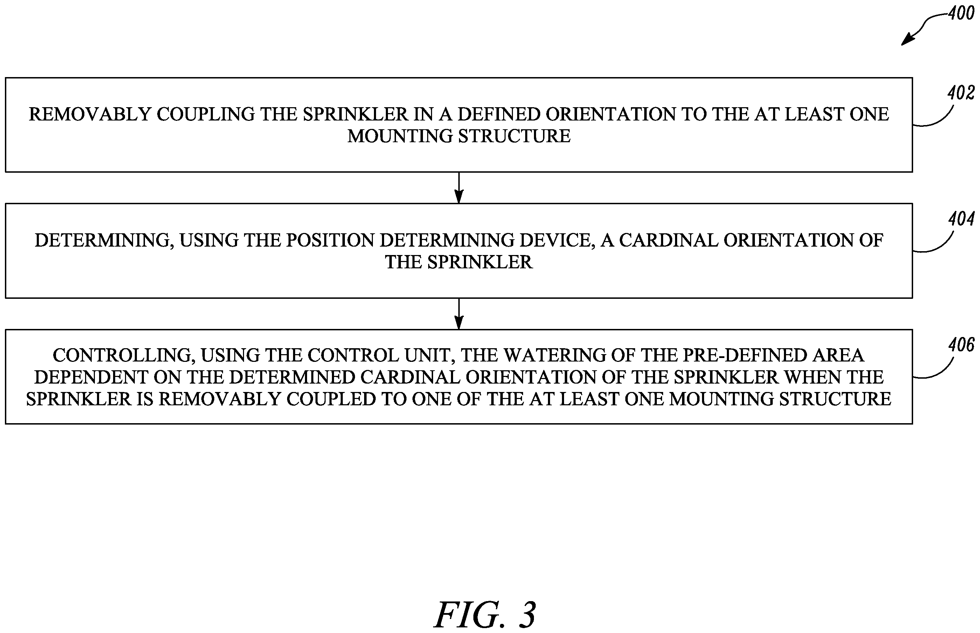

**FIG. 3** illustrates a flowchart of a method 400 of watering the at least one pre-defined area A1, A2, A3 by using the irrigation system 100 according to an exemplary embodiment of the present invention. During a set-up process (not illustrated in **FIG. 3****),** a cardinal orientation of the mounting structure 300 is stored in the storage device 226 of the control unit 224 and correlated to a specific spray pattern. The set-up process of the irrigation system 100 is carried out once before the method 400 of watering the at least one pre-defined area A1, A2, A3 by the irrigation system 100 is performed.

The method 400 comprises step 402. In step 402 the sprinkler 200 is removably coupled in a defined orientation to the at least one mounting structure 300, particularly the mounting structure 300 at the position P2 (as illustrated in FIG. 2).

The method 400 further comprises step 404. In step 404, a cardinal orientation of the sprinkler 200 is determined by the position determining device 230, wherein the position determining device 230 is the compass 230, in particular the electric compass 230. Further, the step 404 comprises comparing the cardinal orientation of the sprinkler 200 with the orientations of the mounting structures 300 at different positions P1, P2, P3 as stored in the storage device 226 of the control unit 224.

During the step 404 of comparing, temporarily volatile caching of the determined cardinal orientation in a RAM may be performed.

The method 400 further comprises step 406. Step 406 comprises controlling, using the control unit 224, the watering of the pre-defined area A1, A2 or A3 dependent on the determined cardinal orientation of the sprinkler 200 when the sprinkler 200 is removably coupled to one of the at least one mounting structure 300. Therefore, the method 400 may comprise storing a correlation between the cardinal orientation of the mounting structure 300 at a position P1, P2 and P3 and a corresponding spray pattern relating to the pre-defined area A1, A2 and A3 in a storage device 226 being part of the control unit 224. Further, the method 400 may comprise deciding which spray pattern is used to water the pre-defined area A1, A2 or A3 based on the correlation stored in the storage device 226 by the processor 228 being part of the control unit 224. In other words, the processor 228 compares the determined cardinal orientation of the sprinkler 200 with the cardinal orientation of the at least one mounting structure 300 stored in the storage device 226 of the control unit 224, and identifies the position P1, P2 or P3 of the sprinkler 200. Once, the position P1, P2 or P3 of the sprinkler 200 is known, the control unit 224 controls the sprinkler 200 to water the pre-defined area A1, A2 or A3 correlated to the position P1, P2 or P3, with the respective spray pattern.

In the drawings and specification, there have been disclosed exemplary embodiments and examples of the invention and, although specific terms are employed, they are used in a generic and descriptive sense only and not for the purpose of limitation of the scope of the invention being set forth in the following claims.

### LIST OF ELEMENTS

- 100: Irrigation System
- 200: Sprinkler
- 202: Body
- 204: Water Channel
- 206: Inlet
- 208: Outlet
- 210: Sprinkler Head
- 212: Nozzle
- 214: Drive Mechanism
- 216: Motor
- 218: Valve
- 220: Flow Sensor
- 222: Output Signal
- 224: Control Unit
- 226: Storage Device
- 228: Processor
- 230: Position Determining Device/ Compass
- 232: Valve Motor
- 234: Power Supply
- 300: Mounting Structure
- 302: Mounting Groove
- 400: Method
- 402: Step
- 404: Step
- 406: Step
- A1, A2, A3: Area
- P1, P2, P3: Position
- X-X': Central Axis
- Y-Y': Rotational Axis

## Claims

1. An irrigation system (100), comprising:
a sprinkler (200) for watering of at least one pre-defined area (A1, A2, A3), and
at least one mounting structure (300) configured such that the sprinkler (200) is removably couplable in a defined orientation to the at least one mounting structure (300),
**characterized in that**:
the sprinkler (200) comprises a position determining device (230) configured to determine a cardinal orientation of the sprinkler (200), and
wherein the irrigation system (100) further comprises:
a control unit (224) configured to control the watering of the at least one pre-defined area (A1, A2, A3) dependent on the determined cardinal orientation of the sprinkler (200) when the sprinkler (200) is removably coupled to one of the at least one mounting structure (300).

2. The irrigation system (100) according to claim 1,
wherein the position determining device (230) is a compass (230), in particular an electric compass.

3. The irrigation system (100) according to any one of the preceding claims, wherein the irrigation system (100), in particular the control unit (224), comprises a storage device (226),
wherein in the storage device (226) a correlation between the cardinal orientation and a spray pattern for the watering of the at least one pre-defined area (A1, A2, A3) is stored.

4. The irrigation system (100) according to any one of the preceding claims, wherein each of the at least one pre-defined area (A1, A2, A3) is associated with one of the at least one mounting structure (300) such that the sprinkler (200) is usable to water different pre-defined areas (A1, A2, A3) depending on the mounting structure (300) with which the sprinkler (200) is removably coupled.

5. The irrigation system (100) according to any one of the preceding claims, wherein the irrigation system (100) comprises at least two mounting structures (300),
wherein the at least two mounting structures (300) are positioned separately from each other,
in particular, wherein the mounting structure (300) is an underground housing or an aboveground plate.

6. The irrigation system (100) according to claim 5,
wherein to each of the at least two mounting structures (300) an individual predefined area (A1, A2, A3) is associated.

7. The irrigation system (100) according to claim 6,
wherein the at least two individual pre-defined areas (A1, A2, A3) comprise different shapes.

8. The irrigation system (100) according to any one of the claims 5 to 7, wherein each of the at least two mounting structures (300) is positioned such that a cardinal orientation of a sprinkler removably coupled to the respective mounting structure in the defined orientation has a cardinal orientation which deviates by at least substantially 10 degrees.

9. The irrigation system (100) according to any one of the claims 3 to 8, wherein the irrigation system (100), in particular the control unit (224), comprises a processor (228),
wherein the processor (228) is configured to decide which spray pattern is used to water the pre-defined area (A1, A2, A3) based on the correlation stored in the storage device (226).

10. A method (400) of watering at least one pre-defined area (A1, A2, A3) by using the irrigation system (100) according to any one of the preceding claims, wherein the method (400) comprising:
removably coupling the sprinkler (200) in a defined orientation to the at least one mounting structure (300),
determining, using the position determining device (230), a cardinal orientation of the sprinkler (200), and
controlling, using the control unit (224), the watering of the at least one pre-defined area (A) dependent on the determined cardinal orientation of the sprinkler (200) when the sprinkler (200) is removably coupled to one of the at least one mounting structure (300).

11. The method (400) according to claim 10, further comprising
providing the position determining device (230) as a compass (230), in particular an electric compass.

12. The method (400) according to claim 10 or 11, further comprising
providing the irrigation system (100), in particular the control unit (224) with a storage device (226),
storing a correlation between the cardinal orientation and a spray pattern for the watering of the at least one pre-defined area (A1, A2, A3) in the storage device (226).

13. The method (400) according to any one of the claims 10 to 12, further comprising
providing the irrigation system (100) with at least two mounting structures (300), in particular wherein the mounting structure (300) is an underground housing or an aboveground plate, and
positioning the at least two mounting structures (300) separately from each other.

14. The method (400) according to any one of the claims 10 to 13, further comprising
providing the irrigation system (100) with at least two mounting structures (300),
positioning each of the at least two mounting structures (300) such that a cardinal orientation of a sprinkler removably coupled to the respective mounting structure in the defined orientation, has a cardinal orientation which deviates by at least substantially 10 degrees.

15. The method (400) according to claim 14, further comprising
associating each of the at least two mounting structures (300) with an individual pre-defined area (A1, A2, A3), and/or
providing the irrigation system (100), in particular, the control unit (224) with a processor (228),
deciding by the processor which spray pattern is used to water the predefined area (A) based on the correlation stored in the storage device (226).
